# EUROPÄISCHE PATENTSCHRIFT

(11) **EP 1 752 032 B1**
(45) Veröffentlichungstag und Bekanntmachung des Hinweises auf die Patenterteilung: **27.02.2008**
(21) Anmeldenummer: 06016059.5
(22) Anmeldetag: 02.08.2006
(51) Int. Cl.: A01C 15/04, A01C 7/04, A01C 7/08

(54) **Pneumatische Verteilmaschine**
Pneumatic distributing device
Distributeur pneumatique

(30) Priorität: 09.08.2005 DE 102005037520
(43) Veröffentlichungstag der Anmeldung: 14.02.2007
(73) Patentinhaber: Amazonen-Werke H. Dreyer GmbH & Co. KG, 49205 Hasbergen (DE)
(72) Erfinder: Tiessen, Reimer Uwe, 26135 Oldenburg (DE); Feldhaus, Werner, 27801 Dötlingen/Geveshausen (DE); Brüggemann, Klaus, 27777 Ganderkesee (DE)

(56) Entgegenhaltungen:
- DE-U1-5202004 002 61
- FR-A1- 2 749 126
- US-A- 3 830 528
- US-B1- 6 343 897

## Beschreibung

Die Erfindung betrifft eine pneumatische Verteilmaschine gemäß des Oberbegriffes des Patentanspruches 1.

Derartige Verteilmaschinen sind in der Praxis bekannt, z.B. aus der Druckschrift DE-U-20 2004 002 615. An dem trichterartigen Ausgangsbereich des Vorratsbehälters befindet sich ein Auslauftrichter, der auf seiner Unterseite eine Auslauföffnung aufweist. An dieser Auslauföffnung ist ein Dosierorgan angeordnet, über welches das Material in eine an das Dosierorgan anschließende Injektorschleuse eingeleitet wird. Diese Injektorschleuse ist auf der einen Seite ein einen Luftstrom erzeugendes Gebläse angeschlossen, während auf der anderen Seite eine Abgangsleitung angeschlossen ist. Sowohl das Dosierorgan weist auf seiner Unterseite einen Anschlussflansch auf, wie auch die Injektorschleuse auf ihrer Oberseite. Die beiden Anschlussflansche werden mittels Befestigungsmitteln zusammengeflanscht. Diese Befestigungsmittel sind in der Regel als Verbindungsschrauben ausgebildet, die durch in den beiden Flanschen angebrachte korrespondierende Löcher gesteckt sind. Die Injektorschleuse ist nur in einer Stellung an dem Dosierer zu befestigen. Wenn die Injektorschleuse in einer anderen Stellung an dem Dosierer angeordnet werden soll, muss eine andere Injektorschleuse mit einem in anderer Zuordnung zu der Injektorschleuse im Flansch angebrachten Löchern eingesetzt werden.

Der Erfindung liegt die Aufgabe zugrunde, die Möglichkeit zu schaffen, dass die Injektorschleuse in der jeweils optimalen Stellung zu dem Dosierer an dem Dosierer angebracht werden kann.

Diese Aufgabe wird erfindungsgemäß dadurch gelöst, dass die Injektorschleuse in zumindest zwei verschiedene Einbaustellungen zu dem Dosierer an dessen Anschlussflansch anordbar ist. Infolge dieser Maßnahmen kann die Injektorschleuse in zumindest zwei verschiedenen Einbaustellungen angebaut werden, so dass die am häufigsten vorkommenden Einbaulagen der Injektorschleuse zu dem Dosierer eingestellt werden können. Es ist jedoch auch möglich, mehrere Einbaustellungen oder stufenlose Einstellungen vorzusehen.

In bevorzugter Weise ist vorgesehen, dass sowohl der Anschlussflansch des Dosierers wie auch der Anschlussflansch des Injektors kreisförmig ausgebildet sind. Hierdurch ist es möglich, bei entsprechender Anordnung der Befestigungsmittel die Injektorschleuse in beliebigen Stellungen zu dem Dosierer anzubringen. Dieses kann in einer Ausführungsform dadurch erreicht werden, dass in den Anschlussflanschen kreisbogenförmig ausgestaltete Aussparungen angeordnet sind, dass durch die Aussparung Befestigungs- und Arretierungsmittel zum Befestigen und Einstellen der Injektorschleuse an den Dosierer geführt sind.

Eine andere Ausgestaltung und Anordnung der Injektorschleuse, um sie in verschiedenen Stellungen zu dem Dosierer anordnen zu können, wird dadurch erreicht, dass die kreisförmigen Flansche an ihrem Umfang mit Befestigungsmittel zusammenklemmbar sind.

Weitere Einzelheiten der Erfindung sind den Unteransprüchen, der Beispielsbeschreibung und den Zeichnungen zu entnehmen. Hierbei zeigen
- Fig. 1: die Anordnung der Injektorschleuse an einem Dosierer in der Seitenansicht,
- Fig. 2: die Anordnung der Injektorschleuse an dem Dosierer gemäß Fig. 1 in perspektivischer Darstellung,
- Fig. 3: eine weitere Anordnung der Injektorschleuse an dem Dosierer in Seitenansicht und
- Fig. 4: die Anordnung der Injektorschleuse an dem Dosierer gemäß Fig. 3 in perspektivischer Darstellung

Der Dosierer 1, der als von einer nicht dargestellten Kraftquelle angetriebenen Dosierwalze 2, die in dem Dosiergehäuse 3 angeordnet ist, gebildet wird, ist in nicht dargestellter Weise an dem unteren Ende, des eine Auslauföffnung aufweisenden Auslauftrichters eines Vorratsbehälters angeordnet. Der Dosierer 1 weist an seinem unteren Ende einen kreisförmigen Anschlussflansch 4 auf, in dem kreisbogenförmig ausgegestaltete Aussparungen 5 angeordnet sind. An dem Anschlussflansch 4 des Dosierers 1 ist der Anschlussflansch 6 der Injektorschleuse 7 angeordnet. Die Injektorschleuse 7 ist auf der Eingangsseite 8 über an eine nicht dargestellte Leitung an eine Luftströmung erzeugendes Gebläse angeordnet. Die Abgangsseite 9 der Injektorschleuse 7 ist an eine nicht dargestellte Abgangsleitung, die z.B. zu einem Verteilerkopf einer als Sämaschine ausgebildeten Verteilmaschine führt, angeschlossen. In dem Anschlussflansch 6 der Injektorschleuse 7 sind ebenfalls Durchbrüche bzw. kreisbogenförmig ausgestaltete Aussparungen angeordnet, durch welche als Schrauben 10 ausgebildete Befestigungsmittel und Arretierungsmittel angeordnet sind. Mittels dieser Befestigungs- und Arretierungsmittel 10 ist die Injektorschleuse 7 an dem Dosierer 1 befestigt und die Injektorschleuse 7 kann gegenüber dem Dosierer 1, wie leicht einsehbar ist, stufenlos in unterschiedlichen Positionen und Winkelstellungen zu dem Dosierer 1 eingestellt werden.

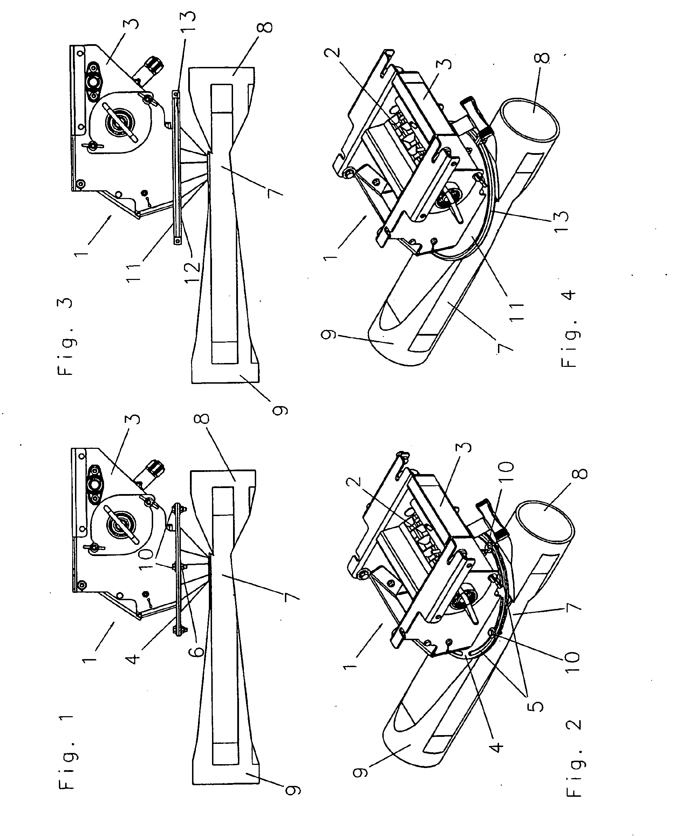

Das Ausführungsbeispiel gemäß Fig. 3 und 4 unterscheidet sich von dem Ausführungsbeispiel gemäß Fig. 1 und 2 dadurch, dass in den Befestigungsflanschen 11 und 12 keine Durchbrüche angeordnet sind, sondern die kreisförmigen Befestigungsflansche 11 und 12 des Dosierers 1 und der Injektorschleuse 7 sind mittels eines um den Umfang der kreisförmigen Flansche 11 und 12 geschlungenen Spannringes 13 ausgebildeten Befestigungsmittels befestigt und so in der jeweiligen Position von Injektorschleuse 7 zu Dosierer 1 festgeklemmt.

## Patentansprüche

1. Pneumatische Verteilmaschine mit einem trichterartigen Vorratsbehälter mit zumindest einem eine Auslauföffnung aufweisenden Auslauftrichter, wobei unter der Auslauföffnung des Auslauftrichters ein Dosierer mit einem sich daran anschließenden Anschlussflansch angeordnet ist, wobei an dem Anschlussflansch (4,6,11,12) eine Injektorschleuse (7) mit Zufuhrtrichter und einer Eingangs- (8) und Abgangsleitung (9) angeordnet ist, **dadurch gekennzeichnet, dass** die Injektorschleuse (7) in zumindest zwei verschiedene Einbaustellungen zu dem Dosierer (1) an dessen Anschlussflansch (4,11) anordbar ist.

2. Verteilmaschine nach Anspruch 1, **dadurch gekennzeichnet, dass** der Anschlussflansch (4,11) des Dosierers (1) kreisförmig ausgebildet ist.

3. Verteilmaschine nach Anspruch 1, **dadurch gekennzeichnet, dass** die Injektorschleuse (7) ebenfalls einen Anschlussflansch (6,12) aufweist.

4. Verteilmaschine nach einem oder mehreren der vorstehenden Ansprüche, **dadurch gekennzeichnet, dass** der Anschlussflansch (6,12) der Injektorschleuse (7) kreisförmig ausgebildet ist.

5. Verteilmaschine nach einem oder mehreren der vorstehenden Ansprüche, **dadurch gekennzeichnet, dass** in den Anschlussflanschen (4,6) kreisbogenförmig ausgestaltete Aussparungen (5) angeordnet sind, dass durch die Aussparungen (5) Befestigungs- und Arretierungsmittel (10) zum Befestigen und Einstellen der Injektorschleuse (7) an den Dosierer (1) geführt sind.

6. Verteilmaschine nach Anspruch 1, **dadurch gekennzeichnet, dass** die kreisförmigen Flansche (11,12) an ihrem Umfang mit Befestigungsmittel (13) zusammenklemmbar sind.

## Claims

1. Pneumatic distributor including a funnel-type hopper with at least one discharge funnel that includes an outlet opening, wherein underneath the outlet opening of the discharge funnel is disposed a dosing means with a connecting flange connecting thereto, wherein an injection lock (7) with feed funnel and an incoming (8) and outgoing line (9) is disposed on the connecting flange (4, 6, 11, 12), **characterised in that** the injection lock (7) is disposable in at least two different installation positions relative to the dosing means (1) on its connecting flange (4, 11).

2. Distributor according to claim 1, **characterised in that** the connecting flange (4, 11) of the dosing means (1) is circular.

3. Distributor according to claim 1, **characterised in that** the injection lock (7) also includes a connecting flange (6, 12).

4. Distributor according to one or more of the preceding claims, **characterised in that** the connecting flange (6, 12) of the injection lock (7) is circular.

5. Distributor according to one or more of the preceding claims, **characterised in that** arcuate recesses (5) are disposed in the connecting flanges (4, 6), **in that** securing and locking means (10) for securing and adjusting the injection lock (7) to the dosing means (1) are guided through the recesses (5).

6. Distributor according to claim 1, **characterised in that** the circular flanges (11, 12) can be clamped together at their circumference by securing means (13).

## Revendications

1. Distributeur pneumatique comportant un réservoir d'alimentation en forme de trémie ayant au moins une trémie de sortie munie d'un orifice de sortie,
et sous l'orifice de sortie de la trémie de sortie il est prévu un doseur muni d'une bride de raccordement,
la bride de raccordement (4, 6, 11, 12) ayant un sas d'injecteur (7) avec une trémie d'alimentation, une conduite d'entrée (8) et une conduite de sortie (9),
**caractérisé en ce que**
le sas d'injecteur (7) peut se monter dans au moins deux positions de montage différentes par rapport au doseur (1) sur sa bride de fixation (4, 11).

2. Distributeur selon la revendication 1,
**caractérisé en ce que**
la bride de raccordement (4, 11) du doseur (1) est de forme circulaire.

3. Distributeur selon la revendication 1,
**caractérisé en ce que**
le sas d'injecteur (7) comporte également une bride de raccordement (6, 12).

4. Distributeur selon l'une ou plusieurs des revendications précédentes,
**caractérisé en ce que**
la bride de raccordement (6, 12) du sas d'injecteur (7) est de forme circulaire.

5. Distributeur selon l'une ou plusieurs des revendications précédentes,
**caractérisé par**
des ouvertures (5) en forme d'arcs de cercle dont les brides de raccordement (4, 6) et les ouvertures (5) reçoivent des moyens de fixation et de blocage (10) pour fixer et régler le sas d'injecteur (7) sur le doseur (1).

6. Distributeur selon la revendication 1,
**caractérisé en ce que**
les brides circulaires (11, 12) peuvent être serrées l'une contre l'autre au niveau de leur périphérie par des moyens de fixation (13).
